Europäisches Patentamt

European Patent Office

Office européen des brevets

(11) Publication number: **0 447 622 A1**

# EUROPEAN PATENT APPLICATION

(21) Application number: 90121840.4

(51) Int. Cl.5: **F16L 33/20**

(22) Date of filing: 15.11.90

(30) Priority: 20.03.90 IT 2086390 U

(43) Date of publication of application:
25.09.91 Bulletin 91/39

(84) Designated Contracting States:
AT BE CH DE DK ES FR GB GR LI LU NL SE

(71) Applicant: MURRAY EUROPE S.p.A.
Via Boccaccio, 1
I-20090 Trezzano S/N (Milano)(IT)

(72) Inventor: Gatti, Luigi
Via Nullo, 7
I-20081 Abbiategrasso (Milano)(IT)

(74) Representative: Lecce, Giovanni
Dott. Giovanni Lecce & C. S.r.l. Via G. Negri
10
I-20123 Milano(IT)

(54) Flexible tubing union.

(57) Flexible tubing union (10) comprising a bell member (12) having a coaxial longitudinal mouthpiece hole and a pipe (16) whose terminal part (16') is tapered and inserted in said hole. The bell member (22) has an internal annular seat (14) coaxial with the mouthpiece hole, in which is inserted a part (18) of the pipe for upsetting. Said upset zone (18) is sealed by calking (22) performed on the edge (20) of the annular seat (14).

fig.2

The present invention relates to a flexible tubing union. In particular the present invention relates to a flexible tubing union designed specifically for use with automobile air conditioning systems.

In the provision of systems of machinery of various kinds it is often required to connect different components together for the conveyance or circulation of fluids. To perform said connection there is conventionally used flexible tubing, usually of rubber, which is preferred to rigid pipe especially when the system is subject to vibrations and the length of the connection does not follow a linear path. Rubber ducts, reinforced with textile inserts when necessary, can readily be bent and arranged in an articulated manner during installation of the system. Examples of this can be found in ducts for the supply of liquid to certain household appliances, or in certain circuits found in engines or automobiles.

In all cases there is the basic requirement for accurate and reliable sealing between the flexible tubing and the block to which it is connected.

To achieve this result, at the end of the tubing there is connected and subsequently seamed a bell union sometimes threaded; this constitutes, in case of direct connection to the source of supply, the final connection and sealing member. On the other hand in case of intermediate connection with a rigid tubular element it is necessary that the bell union provide simultaneous sealing with the latter also. This arrangement is usual with automobile air conditioning systems, which require jointed connections and passages with non linear lengths of the tubing in which the cooling liquid circulates. In this case the bell union incorporates a pipe, emerging from a front, provided with two upsettings achieved immediately outside and inside the mouthpiece of said bell; to increase the seal provided by this double upsetting of the pipe there is performed in general another welding opposite the outer upsetting.

This system however has a serious drawback. The considerable and continuous vibrations produced by the engine when the vehicle is running, in addition to the pulsating pressure of the fluid contained in the circuit, often cause progressive deterioration of the pipe coming out of the bell unit opposite the outer upsetting; this happens because at that point the material is highly work-hardened by the operation undergone. The material has been subjected to a complete distortion at the extreme of workability and hence is subject to breakage as time passes. The drawback is still more serious when it is considered that any breakage causes leakage of the fluid, which could be a fluoro chlorohydrocarbon, i.e. a substance held to be responsible for grave environmental damage.

The object of the present invention is therefore to obviate the above mentioned drawback by providing a union for flexible tubing which would give the highest assurance of sealing and avoid the risk of breakage.

Another object of the invention is to provide a union which would not need welding after formation.

These and other objects are achieved by a flexible tubing union comprising a bell element and a pipe inserted and locked in said bell element and projecting from its free end wherein, in accordance with the present invention, the bell element has at least one internal annular seat for housing a material part of the pipe arranged therein following upsetting, said pipe being further sealed in the shop by calking.

The bell element and the pipe are preferably made of aluminium and its alloys.

The construction and functional characteristics and the advantages of the present union will be made clearer by the following description in which reference is made to the figures of the annexed drawing which illustrates a preferred and nonlimiting form of execution of the present invention and wherein:-

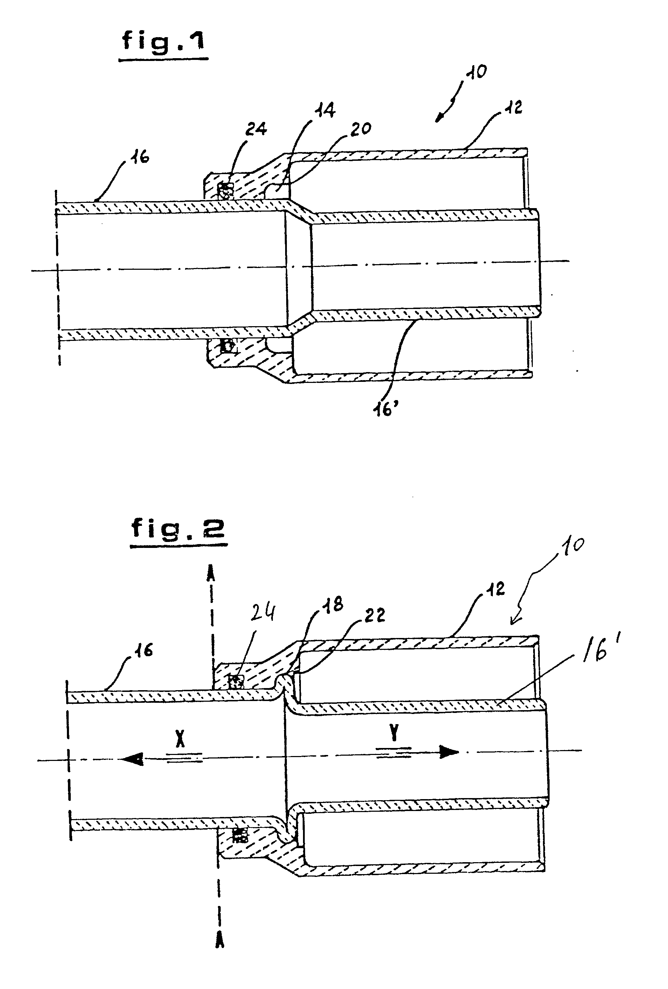

FIG. 1 shows a schematic view of the longitudinal cross section of the union covered by the present invention before upsetting of the pipe inserted in the bell element, and

FIG. 2 shows the same view as in FIG. 1 wherein the pipe is upset and sealed by calking in the seat provided in the bell element.

With reference to the figures the union (10) of the present invention comprises a bell element (12) provided advantageously and preferably of aluminium or its alloys by turning or extrusion and a pipe (16), also achieved preferably in aluminium or its alloys, having the terminal portion (16') tapered. The bell element (12) is provided with a coaxial through-passing longitudinal mouthpiece hole in which is inserted the pipe (16) and an internal annular seat (14) coaxial with the through-passing hole.

The tapered portion (16') of the pipe (16) is inserted in the bell element (12) and is designed to receive the generic rubber tubing (not shown) which is subsequently blocked by seaming in accordance with the conventional art. In the annular seat (14) there is placed the upset part (18) of the pipe (16), achieved by compression of the pipe (16) in the course of its length. In the course of said operation, which is performed with a tool which also provides centring of the bell and calking (which is further described below), the material of the pipe (16) expands radially and is strongly compressed in the housing or seat (14) of the bell (12).

The calking (22) is secured on the edge (20) of the seat (14) after the upsetting has been performed and actually seals the upsetting (18), increasing the blocking of the bell element (12) on the pipe (16).

The seal between the above mentioned elements can if necessary be increased by a toroidal ring (24) of the type known as an "O-ring" inserted before the upsetting (18) in a suitable seat made in the bell element (12). The combined effect of the internal upsetting (18) and the calking (22) with the optional addition of the toroidal ring (24) provide a union whose characteristics of resistance to vibrations and pulsating pressure are absolutely assured.

The bell element (12), having the mouthpiece hole appropriately sized, is forced on the pipe (16) before upsetting thereof. In this manner there is obtained a preliminary seal against blow-by of liquid or gas through the coupling. Even under stress the bell element (12) undergoes no moving, neither in the direction of the arrow "X" nor in the opposite direction indicated by the arrow "Y". In addition the pipe (16) in its most stressed cross section A-A is integral, being free of any external upsetting which would lead to yielding of the material at a critical point. The internal upsetting (18) on the contrary constitutes a single whole with the bell element (12) and is not at all subject to vibrations.

Given the preferred use of the same material for provision of the bell element (12) and the pipe (16), any twisting, even violent, of one or the other of the above mentioned elements can only lead to permanent seizing of the whole unit.

As may be understood from the above, the advantages of the union of the present invention are obvious. The union appears intact without external upsettings consisting of yielded material and therefore is particularly resistant to stress. It requires no further operations such as welding or the like, which are necessary with known unions.

Although the invention has been described in conjunction with a specific embodiment it is evident that many alternatives and variations, such as in materials and dimensions, will be apparent to those skilled in the art in light of the foregoing description. Accordingly, the invention is intended to embrace all of the alternatives and variations that fall within the spirit and scope of the invention.

## Claims

1. Flexible tubing union specifically designed for automobile air conditioning systems and comprising a bell element (12) provided by turning or extrusion and having a coaxial and longitudinal mouthpiece hole and a pipe (16) inserted in said mouthpiece hole and characterized in that the bell element (12) has an internal annular seat (14) coaxial with the mouthpiece hole and the pipe (16) has an upset zone (18) arranged in said annular seat (14), said upset zone (18) being sealed by a calking (22) provided on an edged portion (20) of the seat (14).

2. Flexible tubing union in accordance with claim 1 characterized in that the bell element (12) has an internal annular seat for housing a toroidal ring (24) positioned in front of the upset zone (18).

3. Flexible tubing union in accordance with claim 1 or 2 wherein the part (16') of the pipe (16) inserted in the bell element (12) is tapered.

4. Flexible tubing union in accordance with any of the above claims characterized in that the bell element (12) and the pipe (16) are both made of aluminium or its alloys.

## fig.1

## fig.2

# DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-3 924 883 (FRANK) <br> * Figures 3,1; claim 1 * <br> – – – | 1 | F 16 L 33/20 |
| Y | GB-A-1 071 856 (GIRLING LTD) <br> * Page 1, lines 54-62 * <br> – – – | 1 | |
| A | GB-A-7 749 53 (THE WEATHERHEAD CO.) <br> * Figures 1-4 * <br> – – – – – | 1 | |
| | | | **TECHNICAL FIELDS SEARCHED (Int. Cl.5)** |
| | | | F 16 L |

The present search report has been drawn up for all claims

| Place of search | Date of completion of search | Examiner |
|---|---|---|
| The Hague | 13 June 91 | BUDTZ-OLSEN A. |

CATEGORY OF CITED DOCUMENTS

X : particularly relevant if taken alone
Y : particularly relevant if combined with another
document of the same catagory
A : technological background
O : non-written disclosure
P : intermediate document
T : theory or principle underlying the invention

E : earlier patent document, but published on, or after the filing date
D : document cited in the application
L : document cited for other reasons

 

& : member of the same patent family, corresponding document